Europäisches Patentamt

European Patent Office

Office européen des brevets

(19)

(11) Veröffentlichungsnummer : **0 313 130 B1**

## (12) EUROPÄISCHE PATENTSCHRIFT

(45) Veröffentlichungstag der Patentschrift :
**10.05.95 Patentblatt 95/19**

(51) Int. Cl.⁶ : **H01L 41/08, H02N 2/00**

(21) Anmeldenummer : **88202192.6**

(22) Anmeldetag : **04.10.88**

(54) **Elektrischer Rotations- oder Linearmotor, dessen Läufer mittels Ultraschallschwingungen angetrieben wird.**

(30) Priorität : **21.10.87 DE 3735623**

(43) Veröffentlichungstag der Anmeldung :
**26.04.89 Patentblatt 89/17**

(45) Bekanntmachung des Hinweises auf die
Patenterteilung :
**10.05.95 Patentblatt 95/19**

(84) Benannte Vertragsstaaten :
**DE FR GB IT**

(56) Entgegenhaltungen :
**FR-A- 2 525 410**
**US-A- 4 325 264**
**SOVIET INVENTIONS ILLUSTRATED, Abteilung V, Woche D 39, 4. November 1981,Derwent Publications LTD, London GB**

(73) Patentinhaber : **Philips Patentverwaltung GmbH**
**Wendenstrasse 35c**
**D-20097 Hamburg (DE)**
(84) **DE**
Patentinhaber : **Philips Electronics N.V.**
**Groenewoudseweg 1**
**NL-5621 BA Eindhoven (NL)**
(84) **FR GB IT**

(72) Erfinder : **Eusemann, Roland, Dr. rer. nat.**
**Friedrich-Ebert-Allee 27**
**D-5100 Aachen (DE)**
Erfinder : **Oepen, Heinrich**
**Wenauer Strasse 6**
**D-5190 Stolberg-Gressenich (DE)**
Erfinder : **Hammers, Anton**
**Amyastrasse 32**
**D-5100 Aachen (DE)**

(74) Vertreter : **Kupfermann, Fritz-Joachim,**
**Dipl.-Ing. et al**
**Philips Patentverwaltung GmbH**
**Postfach 10 51 49**
**D-20035 Hamburg (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung bezieht sich auf einen elektrischen Rotations- oder Linearmotor, dessen Läufer mittels Ultraschallschwingungen angetrieben wird von piezoelektrischen Schwingelementen, die mittels hochfrequenter, elektrischer Schwingungen in eine Resonanzschwingung versetzt werden und diese Schwingungen auf eine Anzahl bürstenartig angeordneter Vortriebsstifte übertragen, gegen deren freie Enden eine Reibfläche des Läufers gedrückt wird, wobei die einzelnen Übertragungsstifte unter einem Winkel $\alpha$ zur Senkrechten auf dem kontaktierenden Teil der Reibfläche angestellt sind.

Ein derartiger piezoelektrischer Motor ist aus der US-PS 44 53 103 bekannt. Durch Anlegen einer hochfrequenten, elektrischen Wechselspannung an das piezoelektrische Schwingelement werden in diesem mechanische Schwingungen erregt, die über die Übertragungsstifte auf den Läufer übertragen werden. Die Amplitude der mechanischen Schwingungen beträgt wenige µm. Die Übertragungsstifte, die ähnlich einer Bürste an dem Schwingelement angeordnet sein können, übertragen die mechanische Schwingung des Schwingelementes auf den Läufer, wobei jede Schwingung eine Weiterbewegung des Läufers um entsprechend wenige µm veranlaßt. Jeder einzelne Übertragungsstift kann dabei nur eine geringe Verschiebe- oder Verdrehkraft auf die Reiboberfläche des Läufers ausüben. Die Reibfläche zwischen dem Läufer und den Übertragungsstiften beträgt nur wenige Quadratmillimeter. Eine solche kleine Reibfläche führt dazu, daß die Übertragungsstifte erheblichen mechanischen Belastungen ausgesetzt sind, die zu einem schnellen Verschleiß führen können.

Bei dem in der US-PS 44 53 103 beschriebenen Aufbau weisen die Übertragungsstifte einen Neigungswinkel $\alpha$ zu einer Senkrechten auf der Reibfläche des Läufers auf. Der Neigungswinkel soll auf Werte zwischen 40° und 50° eingestellt werden. Ein solcher Neigungswinkel hat zur Folge, daß der Wirkungsgrad des Motors gering ist.

Aus der US-PS 43 25 264 ist es darüber hinaus bekannt, den Anstellwinkel der Übertragungsstifte sehr steil, beispielsweise auf 5° einzustellen. Auch dieser Motor hat einen niedrigen Wirkungsgrad. Er kann darüber hinaus nur relativ kleine Drehmomente erzeugen und neigt bei mechanischer Belastung zu starker Geräuschentwicklung.

Es ist Aufgabe der Erfindung, einen Motor der eingangs erwähnten Art zu schaffen, der sich durch einen geringen Verschleiß und einen guten Wirkungsgrad auszeichnet.

Die gestellte Aufgabe ist erfindungsgemäß dadurch gelöst, daß der Anstellwinkel $\alpha$ mindestens so groß als der Haftreibungswinkel, jedoch nicht größer als 35° ist, der sich wie folgt definiert als

$$\alpha \text{ Haftreibung } = \text{arctg } \mu,$$

wobei $\mu$ der Haftreibungskoeffizient zwischen den Vortriebsstiften und der Reibfläche ist.

Ein solcher Motor hat einen hohen Wirkungsgrad, ist verschleißarm und zeichnet sich durch einen gleichmäßigen und geräuscharmen Lauf aus. Ein derartig ausgelegter Motor macht den Einsatz von piezoelektrischen Motoren interessanter und eröffnet ihm neue Einsatzgebiete. Der Vorteil eines piezoelektrischen Motors, wie sein günstiges spontanes Anlaufverhalten und die maximale Drehmomentübertragung im fest gebremsten Zustand, ermöglichen einen Schrittbetrieb, der nur noch von den elektrischen Stromvorgaben abhängig ist. Schritte eines Schrittmotors lassen sich so unabhängig von mechanischen Polanordnungen in der Weglänge frei wählen. Nachstellanordnungen und Greifarmbewegungen sind so wesentlich feinfühliger als bisher durchführbar.

Nach einer weiteren Ausgestaltung der Erfindung ist vorgesehen, daß der Anstellwinkel zwischen 15° und 25° gewählt ist. Ein derartiger Anstellwinkel hat sich für ein befriedigendes Verhältnis von eingegebener Leistung und abgegebener Leistung bei vielen Reibpaarungen als besonders günstig erwiesen.

Nach einer weiteren Ausgestaltung der Erfindung ist vorgesehen, daß die Schwingrichtung in an sich bekannter Weise senkrecht zur Reibfläche oder parallel zur Reibfläche verläuft. Die Schwingrichtung kann in an sich bekannter Weise senkrecht zur Reibfläche verlaufen. Es hat sich aber gezeigt, daß es für den Betrieb des Motors ebensogut möglich ist, die Schwingrichtung parallel zur Reibfläche verlaufen zu lassen. Die Orientierung der Reibfläche kann damit entsprechend den gewünschten und vorteilhaften mechanischen Gegebenheiten des Aufbaues gewählt werden.

Die Schwingelemente können als eine Vielzahl von Stiften parallel zueinander unter dem Haftreibungswinkel $\alpha$ angeordnet sein. Gegen das freie Ende der Stifte wird eine Masse beispielsweise in Form einer ebenen Platte angedrückt.

Die Stifte können als Drähte, aber auch als plattenförmige Elemente ausgelegt werden. Sie können am freien Ende mit einem Kopf versehen werden, um die Anlagefläche am Läufer zu vergrößern.

Die Vortriebsstifte müssen nicht auf einem ebenen Schwingelement, sondern können beispielsweise auch auf der Mantelfläche eines Ringes befestigt werden. Die Achse jedes einzelnen Stiftes bildet dabei mit der Ringachse eine Ebene und ist unter einem Winkel $\alpha$ zur Ringsenkrechten durch den Fußpunkt des Stiftes geneigt. Gegen das freie Ende der Stifte wird eine Masse angedrückt, deren Reibfläche in Form eines Ringes oder eines Ringsegmentes gestaltet ist. Das ringförmige Schwingelement wird durch Anlegen einer harmonischen Wechselspannung zu resonanten radialen Schwingungen angeregt. Die Masse wird dabei in Richtung der Ringachse bewegt.

Nach einer weiteren Ausgestaltung der Erfindung ist vorgesehen, daß bei den zusammenwirkenden Reibpartnern die Stifte aus Federstahl und der Läufer aus Stahl oder Keramik (Al₂O₃) bestehen. Nach einer weiteren Ausgestaltung der Erfindung ist es dabei von Vorteil, wenn bei den zusammenwirkenden Reibpartnern bei einem Läufer, der weicher als Stahl ist, die Stifte wenigstens am freien Ende einen Kopf mit einer entsprechend der verminderten Härte vergrößerten Anlagefläche am Läufer aufweisen. Durch die Vergrößerung der Anlagefläche wird die Oberflächenbelastung am Läufer und an den Vortriebsstiften reduziert.

Es sind aber auch andere Partner-Zusammenstellungen möglich. Nach einer weiteren Ausgestaltung der Erfindung ist vorgesehen, daß die Stifte aus Stahl oder zähem Kunststoff und der Läufer aus zähem Kunststoff, wie glas- oder kohlefaserverstärktem Harz bestehen. Federstahlstifte einerseits und ein Läufer aus Keramik andererseits zeigen geringe gegenseitige Verschleißerscheinungen, so daß ein längerer Betrieb des Motors ohne Läuferaustausch möglich ist.

Nach einer weiteren Ausgestaltung der Erfindung ist vorgesehen, daß der Anstellwinkel α der Vortriebsstifte bei einem Rotationsmotor mit einer kreisförmigen, ebenen Läuferplatte von der Läuferachse zum Läuferplattenrand immer kleiner wird. Auf diese Weise lassen sich alle Übertragungsstifte, sowohl die innen als auch die außen angeordneten optimal für den Vorschub ausnutzen.

Bei einer speziellen Ausgestaltung des Motors, die als Rotationsmotor einsetzbar ist, ist vorgesehen, daß ein in radialer Richtung elastisch und in Umfangsrichtung verdrehsteif gelagertes, piezoelektrisches, ringförmiges Schwingelement auf seiner Außenwandung mit vorstehenden Vortriebsstiften versehen ist, die mit einer Innenwand eines Läufers zusammenwirken. Bei einem derartigen koaxial arbeitenden piezoelektrischen Rotationsmotor läßt sich eine gedrungene, axial kurze Bauweise erreichen.

Nach einer weiteren Ausgestaltung der Erfindung läßt sich der Einfluß des Verschleißes auf die Laufeigenschaften des Motors weitgehend dadurch beseitigen, daß die Innenwand des topfförmigen Läufers konisch und die Vortriebsstifte angepaßt an diese Konizität unterschiedlich lang sind, so daß die Stifte auch bei Verschleiß von sich oder der Innenwand stets mit nahezu konstanter Kraft gegen die Innenwand gedrückt werden. Die Kegelform der Reibfläche gewährleistet, daß in Achsrichtung nebeneinander liegende Stifte mit nahezu gleicher Kraft belastet werden von einem Andruckelement, welches den topfförmigen Läufer gegen die Stifte drückt.

Nach einer weiteren Ausgestaltung der Erfindung ist vorgesehen, daß der Läufer in zwei Teile aufgeteilt ist, die einzeln abgefedert gegen die Vortriebsstifte gedrückt werden. Durch die Aufteilung des Läufers in zwei Teile, die einzeln abgefedert gegen die Vortriebsstifte gedrückt werden, läßt sich der Andruck des Läufers gegen die Vortriebsstifte besser dosieren.

Nach einer weiteren Ausgestaltung der Erfindung ist vorgesehen, daß bei einer Ausbildung als Linearmotor das Schwingelement als piezoelektrischer Hohlzylinder ausgebildet ist, durch das eine Achse hindurchgeführt ist, wobei entweder die Achse als Läufer gegenüber einem ortsfesten Hohlzylinder oder der Hohlzylinder als Reiter gegenüber der Achse verfahrbar sind, wobei die Achse einen ovalen Querschnitt aufweist. Bei einer derartigen Weiterbildung ist dann in weiterer Ausgestaltung der Erfindung vorgesehen, daß die Vortriebsstifte auf der oberen und die Vortriebsstifte auf der unteren Hälfte der Innenwand des piezoelektrischen Hohlzylinders so angebracht sind, daß die Stifte durch Andrücken gegen die Reibfläche eine Relativverschiebung gegenüber der Achse in der einen Richtung und die Stifte beim Andrücken gegen die Reibfläche eine Relativverschiebung in die entgegengesetzte Richtung bewirken. Bei einem solchen Linearmotor läßt sich damit auf einfache Weise ein gegenläufiger Betrieb beispielsweise für Schreibgeräte realisieren.

Die in der US-PS 43 25 264 beschriebene Anordnung gewährleistet eine Bewegung nur in einer Richtung. Um die Bewegungsrichtung umkehren zu können und damit einen Antrieb zu erhalten, der auf einer vorgegebenen Strecke hin- und herfahren kann, ist nach einer weiteren Ausgestaltung der Erfindung vorgesehen, daß der Antrieb beispielsweise aus zwei Schwingelementen aufgebaut ist, die getrennt angesteuert werden können. In Weiterbildung der Erfindung ist vorgesehen, daß ein Läufer von U-förmiger Gestalt vorgesehen ist und auf den Oberflächen der Schingelemente Vortriebsstifte so angeordnet sind, daß durch Andrücken der Stifte des einen Schwingelementes gegen die Reibfläche der Läufer in die eine und durch Andrücken der Stifte des anderen Schwingelementes gegen die Reibfläche in die entgegengesetzte Richtung bewegt wird.

Das Andrücken der Stifte des ersten oder zweiten Schwingelementes gegen den Läufer kann beispielsweise mit einem Exzenter, einer Wippe, einem Hebel oder einem Schneckengewinde erfolgen, die mechanisch, elektrisch, piezoelektrisch oder magnetisch betätigt werden.

Die Hin- und Rückbewegung können auch mit einem einzigen Schwingelement erzeugt werden. Dazu kann die Oberfläche des Schwingelementes in zwei Hälften unterteilt werden. Die Vortriebsstifte werden auf beiden Hälften derart befestigt, daß beim Andrücken des Läufers gegen die Stifte der einen Hälfte eine Hin- und beim Andrücken gegen die andere Hälfte eine Rückbewegung erfolgt.

Die Erfindung wird anhand der Zeichnungen näher erläutert. Es zeigen:

Fig. 1 ein Prinzipbild eines piezoelektrischen Motors mit einem mit Vortriebsstiften versehenen Stator und einem schematisch angedeuteten Rotor,

Fig. 1a ein Prinzipbild eines piezoelektrischen Motors nach Fig. 1, bei dem das freie Ende der Stifte mit einem Kopf versehen ist zur Vergrößerung der Anlagefläche mit der Reibfläche des Läufers,

Fig. 2 eine Ausführungsform eines piezoelektrischen Motors mit radialer Anordnung der Vortriebsstifte und einem etwa topfförmigen Läufer, der einen piezoelektrischen Ring umschließt,

Fig. 3 den piezoelektrischen Ring in dem piezoelektrischen Motor nach Fig. 2 mit an seiner Außenwand angeordneten Vortriebsstiften,

Fig. 4 eine abgewandelte Ausführungsform eines piezoelektrischen Motors nach Fig. 2 mit einem in zwei Teile aufgeteilten Läufer, wobei die beiden Läuferteile radial gegen die Vortriebsstifte gedrückt sind,

Fig. 5 ein Ausführungsbeispiel eines piezoelektrischen Motors in Axialausführung mit Vortriebsstiften an einer ebenen Kreisfläche und einer Läuferscheibe, die gegen die Vortriebsstifte gedrückt wird,

Fig. 6 eine Draufsicht auf die mit Vortriebsstiften versehene ebene Schwingfläche des piezoelektrischen Motors nach Fig. 5,

Fig. 7 eine Drauf- und eine Seitenansicht eines Ausschnittes der Schwingfläche nach Fig. 6 mit von innen nach außen abnehmendem Anstellwinkel der Stifte,

Fig. 8 einen als Linearmotor ausgebildeten piezoelektrischen Motor, der in der Lage ist, eine Achse linear auf einer vorgegebenen Strecke hin und her zu bewegen,

Fig. 9 den Schnitt IX-IX durch den Antriebsteil des piezoelektrischen Motors nach Fig. 8,

Fig. 10 ein zweites Ausführungsbeispiel eines piezoelektrischen Linearmotors mit einem U-förmigen Läufer und zwei getrennt voneinander ansteuerbaren Schwingelementen.

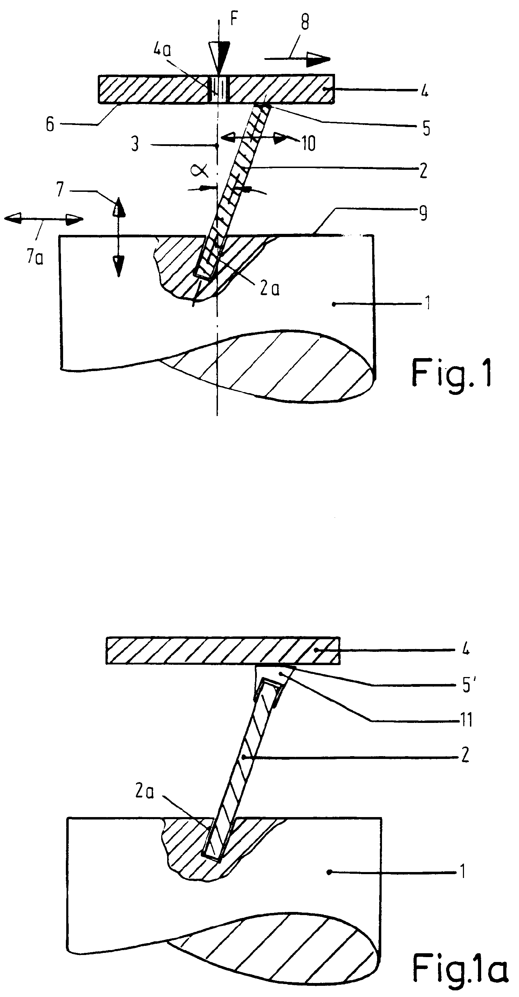

Das in Fig. 1 dargestellte Aufbauprinzip eines piezoelektrischen Motors ist sowohl für einen Linear- als auch einen Rotationsmotor einsetzbar. In ein piezoelektrisches Schwingelement 1, das in Fig. 1 rein schematisch dargestellt ist, wurde ein Vortriebsstift 2 durch Einkleben in eine Bohrung 2a festgesetzt. Der Vortriebsstift 2 ist unter einem Anstellwinkel $\alpha$ zu einer Senkrechten 3 gegenüber einem um eine Achse 4a umlauffähigen Läufer 4 angeordnet. Der Läufer 4 wird mittels einer durch einen Pfeil F dargestellten Andruckkraft gegen das freie Ende des Vortriebsstiftes 2 gedrückt. Dadurch liegt der Vortriebsstift 2 mit einer Anlagefläche 5 an einer Reibfläche 6 des Läufers 4 an. Das piezoelektrische Schwingelement 1 wird nun, wie in Fig. 1 angedeutet, in der durch einen Doppelpfeil 7 angedeuteten Richtung senkrecht zur Reibfläche 6 des Läufers 4 in Schwingung versetzt. Durch dieses in Schwingungen Versetzen stößt die Anlagefläche 5 des Vortriebsstiftes 2 pulsierend gegen die Reibfläche 6 des Läufers 4 und bewegt diesen dabei in Richtung eines Pfeiles 8 nach rechts, und zwar immer dann, wenn sich die Oberfläche 9 des Schwingelementes 1 der Reibfläche 6 des Läufers 4 nähert. Die Anlagefläche 5 des Vortriebsstiftes 2 macht dabei eine Bewegung nach rechts in Richtung des rechten Teiles eines Doppelpfeils 10. Wenn sich die Oberfläche 9 des Schwingelementes 1 vom Läufer 4 entfernt, bewegt sich die Stiftspitze nach links in Richtung des linken Teils des Doppelpfeils 10. Die Normalkraft auf den Läufer 4 und damit die Reibungskraft zwischen Vortriebsstift 2 und Läufer 4 ist bei Annäherung der Oberfläche 9 des Schwingelementes 1 gegen den Läufer 4 größer, als wenn sie sich voneinander entfernen. Darüber hinaus ergibt sich bei der Bewegung der Anlagefläche 5 relativ zur Reibfläche 6 nach rechts eine selbstverstärkende und bei der Bewegung der Anlagefläche 5 relativ zur Reibfläche 6 nach links eine selbstschwächende Wirkung der Reibung. Dadurch erfährt der Läufer 4 eine resultierende Kraft nach rechts und wird in Richtung des Pfeiles 8 bewegt.

Das Schwingelement 1 kann auch in der durch den Doppelpfeil 7a angedeuteten Richtung parallel zur Reibfläche 6 des Läufers schwingen. Auch hier führt die selbstverstärkende Wirkung der Reibung bei der Bewegung der Anlagefläche 5 relativ zur Reibfläche 6 nach rechts und die selbstschwächende Wirkung bei der Bewegung relativ nach links zu einer resultierenden Kraft nach rechts und damit zu einer Bewegung des Läufers in Richtung des Pfeiles 8. Der Stift 2 wirkt wie ein mechanischer Gleichrichter, der bei Schwingungen des Schwingelementes 1 in vertikaler oder horizontaler Richtung entsprechend Fig. 1 den Läufer nach rechts in Richtung des Pfeiles 8 bewegt.

Der Anstellwinkel $\alpha$ ist nun so eingestellt, daß er etwa gleich oder etwas größer als der Haftreibungswinkel $\alpha H$ ist, der sich wie folgt definiert als

$$\alpha_H = \text{arctg } \mu \, .$$

Dabei ist $\mu$ der Haftreibungskoeffizient zwischen dem Vortriebsstift 2 und der Reibfläche 6.

Der Vortriebsstift 2 wirkt nun nicht für sich allein. Es ist vielmehr eine Vielzahl derartiger Stifte 2 unter dem Winkel $\alpha$, der etwa zwischen 15° und 25° gewählt ist, bürstenartig angeordnet. Der Anstellwinkel $\alpha$ in der Größenordnung von ca. 20° sorgt für einen besonders guten Wirkungsgrad des Motors.

Die einzelnen Vortriebsstifte 2 können verschieden aufgebaut sein. Es ist immer wichtig, daß zueinander passende Partner von Stift und Läufer zusammenwirken. Eine günstige Paarung der Reibpartner besteht darin, daß die Stifte beispielsweise aus Federstahl und der Läufer aus Stahl oder Aluminiumoxyd (Keramik) bestehen. Es ist aber auch möglich, bei einem Läufer, der weicher als Stahl ist, die Stifte wenigstens an der Anlagefläche 5 so auszubilden, daß sie einen Kopf 11 mit einer entsprechend der verminderten Härte vergrößerten Anlagefläche 5' am Läufer 4 aufweisen. In Fig. 1a sind derartige Partner dargestellt, wobei an dem Partner Vortriebsstift 2 der Kopf 11 vorgesehen ist. Dieser Kopf 11 kann aufgespritzt oder Bestandteil des Stiftes 2 sein.

Es ist auch möglich, daß die Stifte 2 aus Stahl oder zähem Kunststoff und die Reibfläche 6 des Läufers 4 aus zähem Kunststoff, wie glas- oder kohlefaserverstärktem Harz, bestehen. Besteht der Stift dabei aus Stahl, dann wird er wieder mit einem Kopf 11 versehen sein, und besteht der Stift 2 aus Kunststoff, dann wird er etwa die Dicke des Kopfes 11 aufweisen.

Es hat sich gezeigt, daß die Schwingungsrichtung des piezoelektrischen Schwingelementes 1 für eine einwandfreie Funktion des piezoelektrischen Motors von untergeordneter Bedeutung ist. Auch eine Schwingrichtung nach Doppelpfeil 7a parallel zu der Reibfläche 6 des Läufers 4 führt zu günstigen Arbeitsergebnissen.

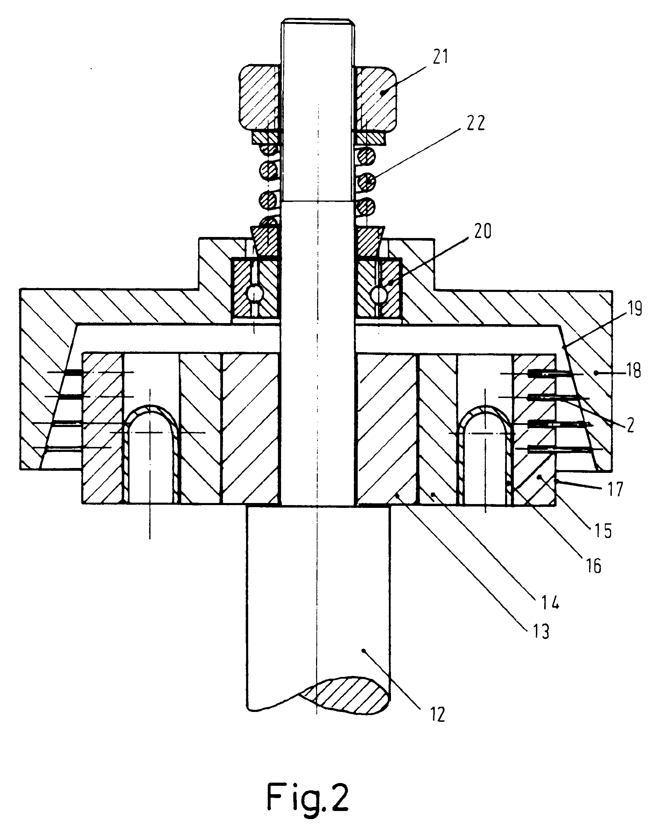

In Fig. 2 ist ein erstes Ausführungsbeispiel eines piezoelektrischen Motors näher erläutert. Bei diesem piezoelektrischen Motor ist mit einer feststehenden Welle 12 eine Isolierhülse 13 verdrehfest verbunden. Ebenfalls verdrehfest auf dieser Isolierhülse 13 befindet sich ein Metallring 14. Diesen Metallring 14 umschließt ein ringförmiges piezoelektrisches Schwingelement 15, das mit dem Metallring 14 über eine Membranfolie 16 elastisch verbunden ist. In das piezoelektrische Schwingelement 15 sind von der Außenwand 17 her Vortriebsstifte 2 auf die Weise eingesetzt, wie sie beispielsweise zu Fig. 1 beschrieben ist. Die Vortriebsstifte 2 sind verschieden lang entsprechend einer konischen Ausbildung der Innenwand 19 eines topfförmig ausgebildeten Läufers 18. Die Innenwand 19 ist dabei als Reibfläche nach Fig. 1 ausgebildet. Der topfförmige Läufer 18 ist in einem Kugellager 20 drehbar gelagert. Mittels einer Vorspannmutter 21 und einer von dieser beaufschlagten Feder 22 kann der Läufer 18 gegen die Vortriebsstifte 2 gedrückt werden. Die unterschiedliche Länge der Stifte 2 und die konische Gestalt der Reibfläche 19 gewährleisten einen ständigen Kontakt zwischen den Stiften und der Reibfläche 19 des Läufers 18, auch bei Verschleiß der Stifte oder der Reibfläche.

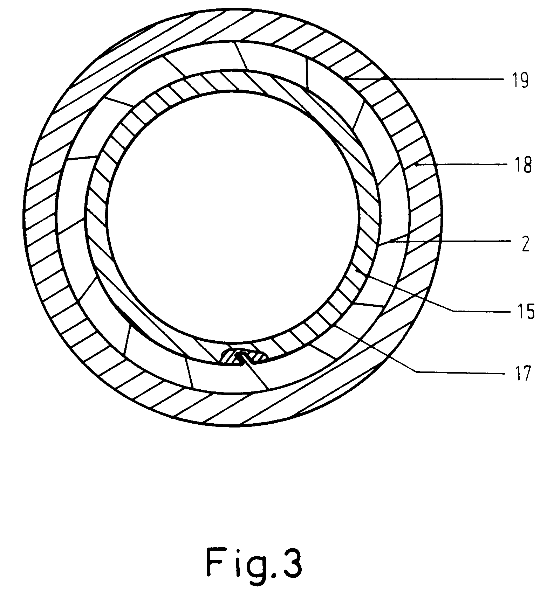

Fig. 3 zeigt, wie das ringförmige, piezoelektrische Element 15 nach Fig. 2 an seiner Außenwandung 17 mit den Vortriebsstiften 2 versehen ist und wie diese Stifte 2 um einen Anstellwinkel $\alpha$ gleich ca. 20° gegenüber der Reibfläche 19 des Läufers 18 angestellt sind.

Um eine Schwingungsamplitude im Bereich von einigen μm zu erhalten, wird das Schwingelement 15 nach Fig. 2 durch nicht näher dargestellte Elektroden mit einer sinusförmigen Wechselspannung einer Frequenz von beispielsweise 34 kHz erregt.

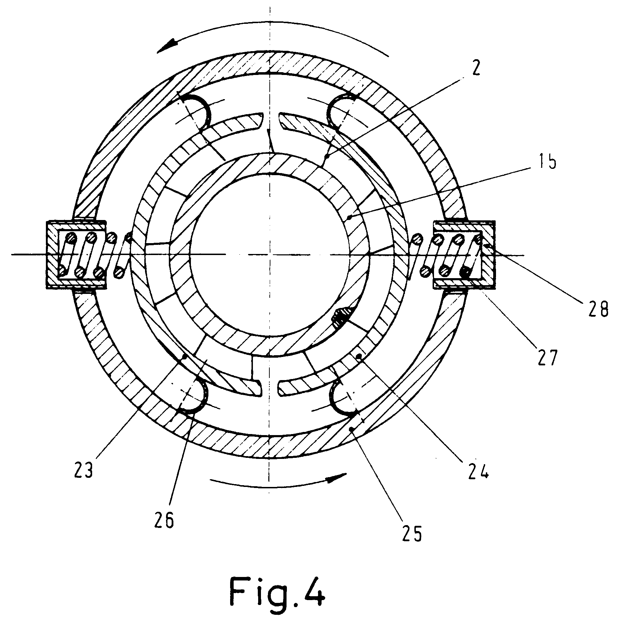

Bei einer in Fig. 4 dargestellten Ausführungsform ist der piezoelektrische Ring 15 umschlossen von zwei Läuferteilen 23, 24. Diese Läuferteile 23, 24 sind zunächst gegenüber einem steifen Außenring 25 mittels Membranfolien 26 abgestützt. Zusätzlich drücken Federn 27 mit Hilfe von Federtöpfen 28 gegen die Läuferteile 23, 24. Durch Drehen der Töpfe 28 senkrecht zur Achse kann die Anlagespannung bzw. der Anlagedruck der Läuferteile 23, 24 gegen die Vortriebsstifte 2 eingestellt werden. Die Membranfolien 26 sorgen für eine Verdrehsicherung der Läuferteile 23, 24 gegenüber dem Ring 25.

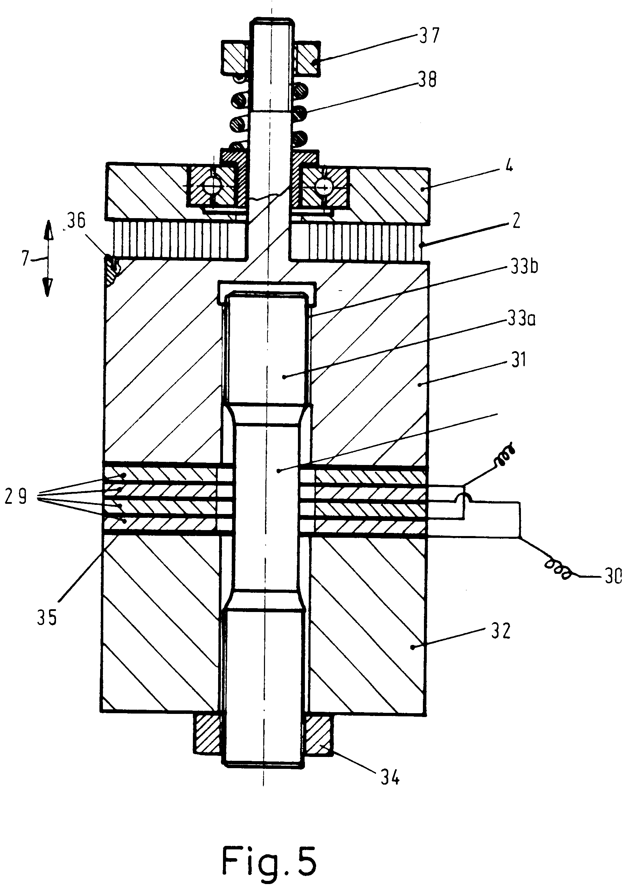

Bei dem Ausführungsbeispiel nach Fig. 5 handelt es sich um eine Axialausführung gegenüber der Radialausführung nach den Fig. 2 bis 4. Mehrere piezoelektrische Scheiben 29 sind in diesem Fall über Anschlüsse 30 an eine Wechselspannung anlegbar, wodurch diese piezoelektrischen Scheiben 29 in axialer Richtung zu schwingen in der Lage sind. Der Aufbau nach Fig. 5 entspricht etwa einem Hantelschwinger. Die piezoelektrischen Scheiben werden von zwei metallischen Zylindern 31, 32 beidseitig eingeschlossen. Eine hantelartige Achse 33 ist mit einem Kopf 33a in den metallischen Körper 31 mittels eines Gewindes 33b eingeschraubt. Mit Hilfe einer Mutter 34 können die beiden metallischen Zylinder 31 und 32 zusammen gespannt werden unter gleichzeitiger Zusammenpressung der piezoelektrischen Scheiben 29 mit ihren zwischengelegten Elektroden 35.

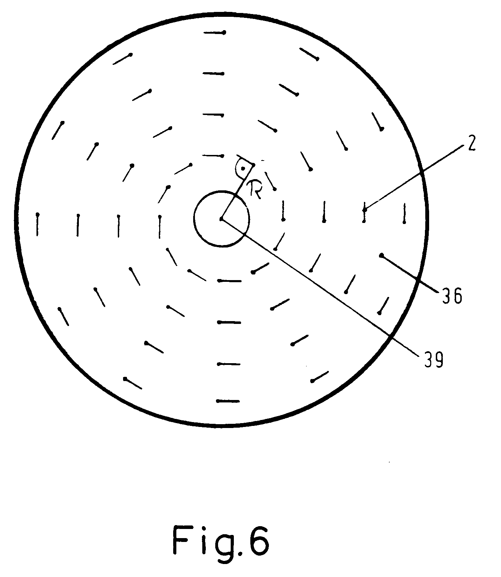

Die piezoelektrischen Scheiben 29 sind in axialer Richtung polarisiert und werden durch das Anlegen einer sinusförmigen Wechselspannung über die Kontakte 30 erregt. Die Frequenz der Wechselspannung wird so gewählt, daß die longitudinale Grundschwingung der Hantel angeregt wird. Bei dem Ausführungsbeispiel nach Fig. 5 beträgt die Resonanzfrequenz beispielsweise 40 kHz. Die Oberfläche 36 des metallischen Zylinders 31 schwingt dabei in Richtung des Doppelpfeiles 7 nach Fig. 1 mit einer Amplitude von wenigen μm. Auf der Oberfläche 36 des Schwingers sind die Vortriebsstifte 2 befestigt. Die Anordnung der Stifte 2 auf der Oberfläche 36 des Schwingers ist in Fig. 6 in der Draufsicht skizziert. Alle Stifte sind um den Anstellwinkel gegen die Senkrechte auf die Oberfläche 36 geneigt. Sie sind so befestigt, daß die Verbindungslinie R zwischen dem Mittelpunkt 39 der Oberfläche 36 und dem Fußpunkt des Stiftes mit der Stiftachse einen rechten Anstellwinkel $\alpha$ einschließt. Die Läuferscheibe 4 wird, wie in Fig. 5 gezeigt, mit Hilfe einer Mutter 37 und einer zwischengeschalteten Feder 38 gegen die Vortriebsstifte gedrückt und aufgrund der ringförmigen Anordnung der Stifte in Umdrehung versetzt. In dem gezeigten Ausführungsbeispiel sind die Vortriebsstifte 2 alle unter dem gleichen Anstellwinkel $\alpha$ gegen die Senkrechte auf die Oberfläche 36 des Schwingers geneigt. Dieser Anstellwinkel liegt bei etwa 20°.

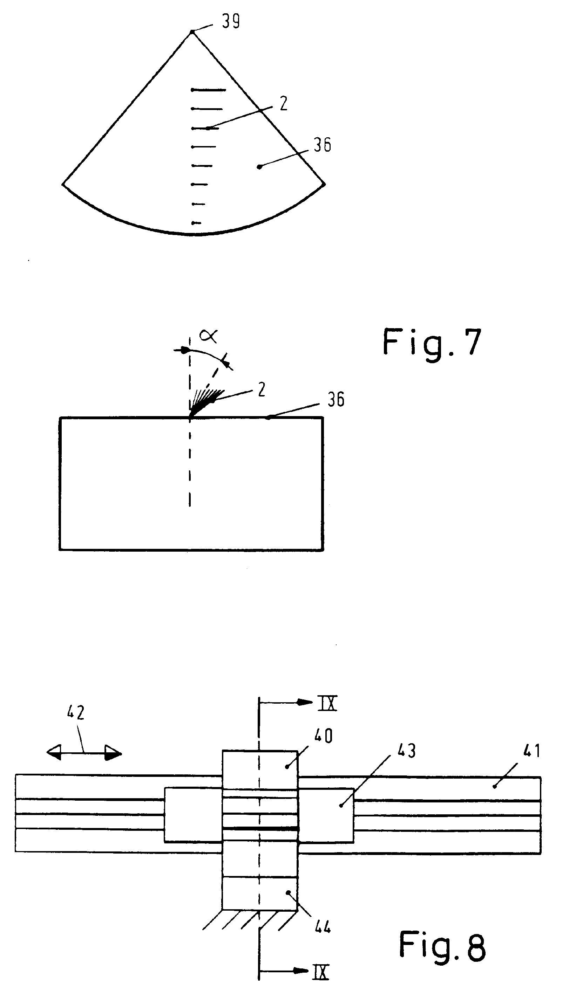

In einer weiteren Ausführungsform der Erfindung ist vorgesehen, daß der Anstellwinkel der Stifte, wie in Fig. 7 in Drauf- und Seitenansicht auf einen Ausschnitt der Oberfläche 36 des Schwingers gezeigt, mit zunehmendem Abstand der Stifte von der Drehachse 39 des Läufers abnimmt. Der veränderliche Anstellwinkel $\alpha$ der Vortriebsstifte 2 bewirkt, daß alle Stifte in annähernd gleichem Maße belastet werden und zum Antrieb beitragen.

Fig. 8 zeigt einen piezoelektrischen Linearmotor. Der Antriebsteil ist in ein Gehäuse 40 eingebaut und bewegt die Achse 41 in der durch einen Doppelpfeil 42 eingezeichneten Richtung horizontal nach links oder rechts. Die Lagerung der Achse erfolgt durch die Gleitschiene 43. Sie ist fest mit dem Gehäuse 40 verbunden. Im Ausführungsbeispiel ist das Gehäuse 40 mit Hilfe der Halterung 44 im Gerät befestigt. Es ist aber ebensogut möglich, die Achse fest im Gerät zu befestigen. Auf der Achse 41 bewegt sich dann der Antriebsteil als Reiter horizontal nach links oder rechts.

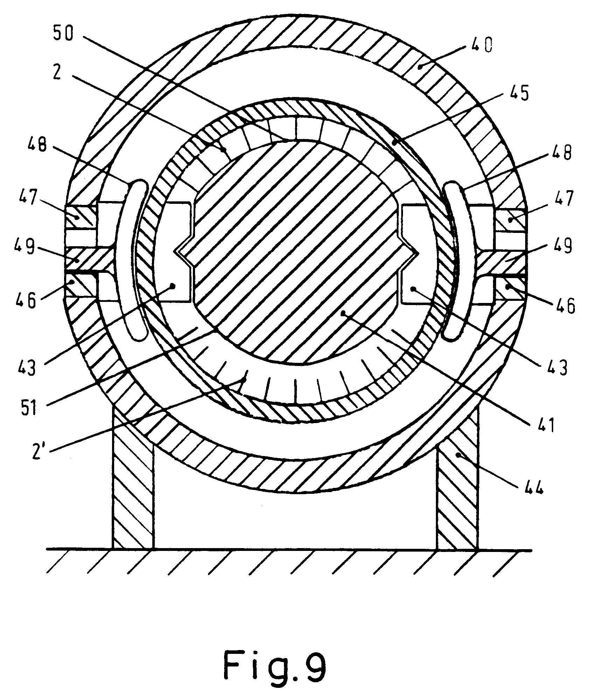

Fig. 9 zeigt den Schnitt IX-IX durch den Antriebsteil nach Fig. 8. Die Achse 41 wird in den Gleitschienen 43 geführt. Diese Gleitschienen sind fest mit dem als Hohlzylinder geformten Gehäuse 40 verbunden. Das Gehäuse 40 wird durch die Halterung 44 im Gerät fixiert. Die Achse 41 kann aufgrund der Führungsschienen nur senkrecht zur Papierebene verschoben werden. Gegen das Gehäuse 40 ist ein piezoelektrischer Hohlzylinder 45 in vertikaler Richtung verschiebbar gelagert. Die Verschiebung erfolgt in dem gezeigten Ausführungsbeispiel mit Hilfe von Elektromagneten 46, 47; sie kann aber auch mechanisch, beispielsweise mit Hilfe eines Hebels, eines Exzenters, einer Kurvenscheibe, eines Schneckengewindes etc., oder piezoelektrisch erfolgen.

Der piezoelektrische Hohlzylinder 45 wird über Membranfolien 48 und Metallplatten 49 im Gehäuse geführt. Die Membranfolien 48 gewährleisten, daß der Piezoring 45 verdrehfest und in axialer Richtung unverschieblich gelagert ist, in radialer Richtung dagegen schwingen kann. Schaltet man das untere Magnetpaar 46 ein, dann werden die Metallplatten 49 und damit der Piezoring 45 nach unten gezogen. Dadurch werden die an der oberen Hälfte der Innenwand des piezoelektrischen Hohlzylinders 45 befestigten Vortriebsstifte 2 gegen die obere Reibfläche 50 der Achse 41 gedrückt. Wird das obere Magnetpaar 47 eingeschaltet, dann werden die Metallplatten 49 nach oben gezogen. Dadurch werden die an der unteren Hälfte des piezoelektrischen Hohlzylinders 45 befestigten Vortriebsstifte 2' gegen die untere Reibfläche 51 der Achse gedrückt. Jeder Stift wird so an der Innenwand des piezoelektrischen Hohlzylinders befestigt, daß seine Achse mit der Zylinderachse in einer Ebene liegt und einen Anstellwinkel $\alpha$ mit der Senkrechten des piezoelektrischen Hohlzylinders durch den Fußpunkt des Stiftes einschließt. Die Vortriebsstifte 2 auf der oberen Hälfte des piezoelektrischen Hohlzylinders 45 sind in Richtung aus der Papierebene heraus und die Vortriebsstifte 2' auf der unteren Hälfte in Richtung in die Papierebene hinein geneigt.

An den piezoelektrischen Hohlzylinder 45 wird über nicht näher eingezeichnete Elektroden eine sinusförmige Wechselspannung gelegt. Die Frequenz wird so gewählt, daß die radiale Grundschwingung des piezoelektrischen Hohlzylinders angeregt wird. Werden durch Einschalten des unteren Magnetpaares 46 die Vortriebsstifte 2 gegen die obere Reibfläche 50 der Achse 41 gedrückt, dann wird sie aufgrund der Neigung der Vortriebsstifte aus der Papierebene heraus bewegt. Umgekehrt wird die Achse 41 bei Einschalten des oberen Magnetpaares 47 in die Papierebene hinein bewegt.

Die Vortriebsstifte 2 und 2' sind alle gleich lang. Die Achse 41 besitzt einen ovalen Querschnitt. Die Reibflächen 50 und 51 sind so gestaltet, daß alle Stifte mit der gleichen Kraft gegen die entsprechende Reibfläche 50 oder 51 drücken.

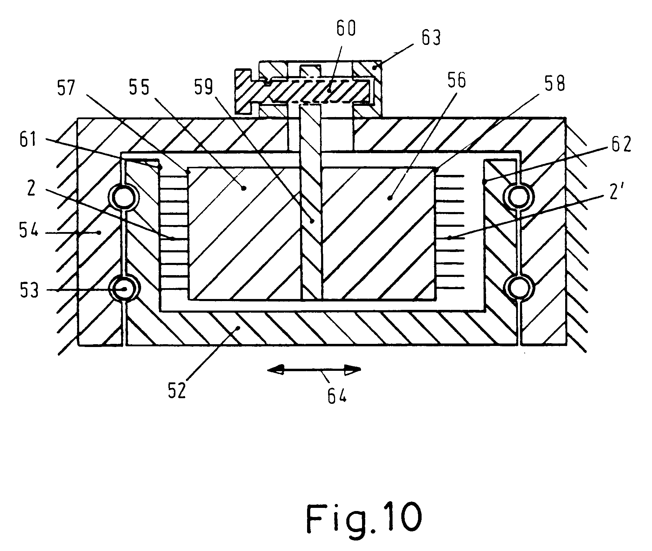

Fig. 10 zeigt einen Schnitt durch eine zweite Ausführungsform eines piezoelektrischen Linearmotors. Ein U-förmiger Läufer 52 wird durch Kugellager 53 in einem Gehäuse 54 geführt und kann sich senkrecht zur Papierebene hin und her bewegen. Das Antriebsteil des Motors besteht aus zwei piezoelektrischen Schwingern 55, 56, die getrennt über nicht näher eingezeichnete Elektroden erregt werden können. Auf den Oberflächen 57, 58 der Schwinger sind Vortriebsstifte 2, 2' befestigt. Sie sind unter einem Anstellwinkel $\alpha$ gegen die Senkrechte auf die Oberflächen 57 bzw. 58 in Richtung der Motorachse geneigt. Ihre Achsen bilden mit der Bewegungsrichtung des Läufers 52 eine Ebene. Die freien Enden der Stifte 2 zeigen in die Papierebene hinein, die freien Enden der Stifte 2' zeigen dagegen aus der Papierebene heraus.

Die Schwinger sind an einer Platte 59 befestigt; sie kann mit Hilfe eines Gewindestiftes 60 senkrecht zu den Reibflächen 61, 62 des Läufers 52 bewegt werden. Die Platte 59 wird dabei über das fest mit dem Gehäuse 54 verbundene Element 63 geführt. Durch die Verschiebung der Platte kommen entweder die Vortriebsstifte 2 oder die Vortriebsstifte 2' mit der Reibfläche 61 bzw. 62 des Läufers 52 in Anlage. Die Anpreßkraft der Stifte gegen den Läufer und damit die Vortriebskraft des Motors läßt sich über die Stellung des Gewindestiftes 60 fein dosieren.

Die Schwinger 55, 56 werden getrennt jeweils mit einer sinusförmigen Wechselspannung zu resonanten Schwingungen erregt. Die Oberflächen können dabei entweder in der durch einen Doppelpfeil 64 angedeuteten Richtung senkrecht zu den Reibflächen 61, 62 oder parallel zu den Reibflächen in Richtung der Motorachse schwingen. In beiden Fällen wird der Läufer 52 durch die Anordnung der Vortriebsstifte 2, 2' senkrecht zur Papierebene hin oder her bewegt. Insbesondere bewegt sich der Läufer 52 in die Papierebene hinein, wenn die Vortriebsstifte 2 gegen die Reibfläche 61 gedrückt werden und der Schwinger 55 erregt wird. Umgekehrt bewegt sich durch Andrücken der Stifte 2' gegen die Reibfläche 62 und Erregung des Schwingers 56 der Läufer 52 aus der Papierebene heraus.

Der optimale Anstellwinkel $\alpha$ der Vortriebsstifte liegt etwa zwischen 10° und 30°. Anstelle der Vortriebsstifte können auch plattenförmige Elemente verwendet werden oder die Stifte zur Vergrößerung der Anlagefläche an die Reibflächen mit einem Kopf versehen werden. Um den Wirkungsgrad des Linearmotors zu optimieren und den Verschleiß zu minimieren, müssen geeignete Reibpartner ausgewählt werden. Gute Ergebnisse erhält man beispielsweise mit gehärteten Stahlstiften und Reibflächen aus Keramik, Stahl oder speziellen gefüllten Kunststoffen.

In dem in Fig. 10 gezeigten Ausführungsbeispiel erfolgt die Umkehrung der Laufrichtung des Läufers durch einen Gewindestift. Das Umschalten kann aber ebensogut beispielsweise magnetisch oder piezoelektrisch mit Hilfe eines Exzenters, einer Wippe oder eines Hebels erfolgen.

## Patentansprüche

1. Elektrischer Rotations- oder Linearmotor, dessen Läufer (4) mittels Ultraschallschwingungen angetrieben wird von piezoelektrischen Schwingelementen (1), die mittels hochfrequenter elektrischer Schwingungen in eine Resonanzschwingung versetzt werden und diese Schwingungen auf eine Anzahl bürstenartig angeordneter Vortriebsstifte (2) übertragen, gegen deren freie Enden (5) eine Reibfläche (6) des Läufers (4) gedrückt wird, wobei die einzelnen Übertragungsstifte (2) unter einem Anstellwinkel $\alpha$ zur Senkrechten auf dem kontaktierenden Teil der Reibfläche (6) angestellt sind, dadurch gekennzeichnet, daß der Anstellwinkel $\alpha$ mindestens so groß als der Haftreibungswinkel, jedoch nicht größer als 35° ist, der sich wie folgt definiert als

$$\alpha \text{ Haftreibung} = \text{arctg } \mu,$$

wobei der Haftreibungskoeffizient zwischen den Vortriebsstiften (2) und der Reibfläche (6) ist.

2. Elektrischer Rotations- oder Linearmotor nach Anspruch 1, dadurch gekennzeichnet, daß der Anstellwinkel zwischen 10° und 30° gewählt ist.

3. Elektrischer Rotations- oder Linearmotor nach Anspruch 1, dadurch gekennzeichnet, daß die Schwingrichtung in an sich bekannter Weise senkrecht zur Reibfläche (6) oder parallel zur Reibfläche (6) verläuft.

4. Elektrischer Rotations- oder Linearmotor nach einem der Ansprüche 1 bis 3, dadurch gekennzeichnet, daß bei den zusammenwirkenden Reibpartnern die Stifte (2) aus Federstahl und der Läufer (4) aus Stahl oder Keramik ($Al_2O_3$) bestehen.

5. Elektrischer Rotations- oder Linearmotor nach einem der Ansprüche 1 bis 3, dadurch gekennzeichnet, daß bei den zusammenwirkenden Reibpartnern (2, 6) bei einem Läufer, der weicher als Stahl ist, die Stifte (2) wenigstens am freien Ende (5) einen Kopf (11) mit einer entsprechend der verminderten Härte vergrößerten Anlagefläche (5') am Läufer (4) aufweisen.

6. Elektrischer Rotations- oder Linearmotor nach Anspruch 5, dadurch gekennzeichnet, daß die Stifte (2) aus Stahl oder zähem Kunststoff und der Läufer (4) aus zähem Kunststoff, wie glas- oder kohlefaserverstärktem Harz, bestehen.

7. Elektrischer Rotations- oder Linearmotor nach einem der Ansprüche 1 bis 6, dadurch gekennzeichnet, daß der Anstellwinkel $\alpha$ der Vortriebsstifte (2) bei einem Rotationsmotor mit einer kreisförmigen, ebenen Läuferplatte (4) von der Läuferachse zum Läuferplattenrand immer kleiner wird.

8. Elektrischer Rotations- oder Linearmotor nach einem der Ansprüche 1 bis 7, dadurch gekennzeichnet, daß ein in radialer Richtung und in Umfangsrichtung verdrehsteif gelagertes, piezoelektrisches, ringförmiges Schwingelement (15) auf seiner Außenwandung (17) mit vorstehenden Vortriebsstiften (2) versehen ist, die mit einer Innenwand (19) eines Läufers (18) zusammenwirken.

9. Elektrischer Rotations- oder Linearmotor nach Anspruch 8, dadurch gekennzeichnet, daß die Innenwand (19) des topfförmigen Läufers (18) konisch und die Vortriebsstifte (2) angepaßt an diese Konizität unterschiedlich lang sind, so daß die Stifte (2) auch bei Verschleiß von sich oder der Innenwand (19) stets mit nahezu konstanter Kraft gegen die Innenwand gedrückt werden.

10. Elektrischer Rotations- oder Linearmotor nach Anspruch 8, dadurch gekennzeichnet, daß der Läufer (18) in zwei Teile (23, 24) aufgeteilt ist, die einzeln abgefedert gegen die Vortriebsstifte (2) gedrückt werden.

11. Elektrischer Rotations- oder Linearmotor nach einem der Ansprüche 1 bis 7, dadurch gekennzeichnet, daß bei einer Ausbildung als Linearmotor das Schwingelement als piezoelektrischer Hohlzylinder (45) ausgebildet ist, durch das eine Achse (41) hindurchgeführt ist, wobei entweder die Achse (41) als Läufer gegenüber einem ortsfesten Hohlzylinder (45) oder der Hohlzylinder (45) als Reiter gegenüber der Achse (41) verfahrbar sind.

12. Elektrischer Rotations- oder Linearmotor nach Anspruch 11, dadurch gekennzeichnet, daß die Achse (41) einen ovalen Querschnitt aufweist.

13. Elektrischer Rotations- oder Linearmotor nach Anspruch 11, dadurch gekennzeichnet, daß die Vortriebsstifte (2) auf der oberen und die Vortriebsstifte (2') auf der unteren Hälfte der Innenwand des piezoelektrischen Hohlzylinders (45) so angebracht sind, daß die Stifte (2) durch Andrücken gegen die Reibfläche (50) eine Relativverschiebung gegenüber der Achse (41) in der einen Richtung und die Stifte (2') beim Andrücken gegen die Reibfläche (51) eine Relativverschiebung in die entgegengesetzte Richtung bewirken.

14. Elektrischer Rotations- oder Linearmotor nach einem der Ansprüche 1 bis 7, dadurch gekennzeichnet, daß bei einem Linearmotor der Antriebsteil aus zwei piezoelektrischen Schwingern (55, 56) besteht, die getrennt voneinander erregt werden können.

15. Elektrischer Rotations- oder Linearmotor nach Anspruch 14, dadurch gekennzeichnet, daß ein Läufer (52) von U-förmiger Gestalt vorgesehen ist und auf den Oberflächen (57, 58) der Schwingelemente (55, 56) Vortriebsstifte (2, 2') so angebracht sind, daß durch Andrücken der Stifte (2) gegen die Reibfläche (61) der Läufer (52) in die eine und durch Andrücken der Stifte (2') gegen die Reibfläche (62) in die entgegengesetzte Richtung bewegt wird.

**Claims**

1. A rotary or linear electric motor whose armature (4) is driven by piezoelectric vibration elements (1) which are made to resonate by means of high-frequency electrical oscillations in order to produce ultrasonic vibrations which are transmitted to a plurality of drive pins (2) which are arranged as brushes and against whose free ends (5) a friction surface (6) of the armature (4) is pressed, the individual drive pins (2) being disposed at a setting angle $\alpha$ relative to the normal to the contact portion of the friction surface (6), characterised in that the setting angle $\alpha$ is selected to be at least equal to the static-friction angle but not greater than 35°, which static-friction angle is defined as follows

$\alpha$ static friction = arc tan $\mu$,

where $\mu$ is the coefficient of static friction between the drive pins (2) and the friction surface (6).

2. A rotary or linear electric motor as claimed in Claim 1, characterised in that the setting angle is selected to be between 10° and 30°.

3. A rotary or linear electric motor as claimed in Claim 1, characterised in that the direction of vibration is perpendicular to the friction surface (6) or parallel to the friction surface (6) in a manner known *per se*.

4. A rotary or linear electric motor as claimed in any one of the Claims 1 to 3, characterised in that of the friction pairs the pins (2) are made of spring steel and the armature (4) is made of steel or a ceramic material ($Al_2O_3$).

5. A rotary or linear electric motor as claimed in any one of the Claims 1 to 3, characterised in that of the friction pairs (2, 6), in the case of an armature of a material softer than steel, the pins (2) have, at least at their free ends (5), a head (11) whose contact area (5') with the armature (4) is enlarged in proportion with the reduced hardness.

6. A rotary or linear electric motor as claimed in Claim 5, characterised in that the pins (2) are made of steel or a tough synthetic resin and the armature (4) is made of a tough synthetic resin, such as glass-fibre or carbon-fibre-reinforced resins.

7. A rotary or linear electric motor as claimed in any one of the Claims 1 to 6, characterised in that the setting angle $\alpha$ of the drive pins (2) in a rotary motor comprising a circular flat armature disc (4) decreases from the armature axis towards the periphery of the armature disc.

8. A rotary or linear electric motor as claimed in any one of the Claims 1 to 7, characterised in that a piezoelectric annular vibration element (15), which is supported elastically in a radial direction and which is supported to be torsionally stiff in a circumferential direction, carries projecting drive pins (2) on its outer wall (17), which pins cooperate with an inner wall (19) of an armature (18).

9. A rotary or linear electric motor as claimed in Claim 8, characterised in that the inner wall (19) of the cup-shaped armature (18) is conical and the drive pins (2) have different lengths adapted to said conical shape, so that the pins (2) are always pressed against the inner wall with a substantially constant force, even in the event of wear of said pins or the inner wall (19).

10. A rotary or linear electric motor as claimed in Claim 8, characterised in that the armature (18) is divided into two sections (23, 24), which are separately spring-loaded against the drive pins (2).

11. A rotary or linear electric motor as claimed in any one of the Claims 1 to 7, characterised in that in the case of a linear motor the vibration element is constructed as a piezoelectric hollow cylinder (45) through which a shaft (41) is passed, either the shaft (41) being movable as an armature relative to a stationary hollow cylinder (45), or the hollow cylinder (45) being movable as a runner relative to the shaft (41).

12. A rotary or linear electric motor as claimed in Claim 11, characterized in that the shaft (41) is of oval cross-section.

13. A rotary or linear electric motor as claimed in Claim 11, characterised in that the drive pins (2) on the upper half and the drive pins (2') on the lower half of the inner wall of the piezoelectric hollow cylinder (45) are arranged in such a way that the pins (2), when pressed against the friction surface (50), produce a relative movement with respect to the shaft (41) in one direction and the other pins (2'), when pressed against the friction surface (51), produce a relative movement in the opposite direction.

14. A rotary or linear electric motor as claimed in any one of the Claims 1 to 7, characterised in that in the case of a linear motor the drive member comprises two piezoelectric resonators (55, 56) which can be energised independently of one another.

15. A rotary or linear electric motor as claimed in Claim 14, characterised in that it comprises an armature (52) of U-shaped construction and on the surfaces (57, 58) of the resonator elements (55, 56) drive pins (2, 2') are arranged in such a way that when the pins (2) are pressed against the friction surface (61) the armature (52) is moved in one direction and when the pins (2') are pressed against the friction surface (62) said armature is moved in the opposite direction.

**Revendications**

1. Moteur électrique rotatif ou linéaire dont le rotor (4) est commandé par des vibrations ultrasoniques au moyen d'éléments piézo-électriques (1) qui sont amenés en vibration à la fréquence de résonance à l'aide de vibrations électriques à haute fréquence et transmettent ces vibrations à une pluralité de broches d'entraînement (2) disposées en forme de brosse, contre les extrémités libres (5) desquelles on appuie une surface de frottement (6) du rotor (4), les différentes broches d'entraînement (2) étant disposées de façon à former un angle α avec la normale au point de contact avec la surface de frottement (6), caractérisé en ce que l'angle d'incidence α, au moins aussi grand que l'angle de frottement statique, mais ne dépasse cependant pas 35°, se définit comme :

angle de frottement statique α = arctg μ

μ étant le coefficient de frottement entre les broches d'entraînement (2) et la surface de frottement (6).

2. Moteur électrique rotatif ou linéaire suivant la revendication 1, caractérisé en ce que l'angle d'incidence α est choisi entre 10° et 30°.

3. Moteur électrique rotatif ou linéaire suivant la revendication 1, caractérisé en ce que la direction de vibration est orientée, de manière en soi connue, perpendiculairement à la surface de frottement (6) ou parallèlement à la surface de frottement (6).

4. Moteur électrique rotatif ou linéaire suivant l'une quelconque des revendications 1 à 3, caractérisé en ce que le couple frottant est constitué d'acier à ressorts pour les broches (2) et d'acier ou de céramique ($Al_2O_3$) pour le rotor (4).

5. Moteur électrique rotatif ou linéaire suivant l'une quelconque des revendications 1 à 3, caractérisé en ce qui concerne le couple frottant (2, 6), lorsque le rotor est moins dur que l'acier, les broches (2) présentent au moins à leur extrémité libre (5) une tête (11) avec une surface de contact (5') avec le rotor (4) agrandie de manière à tenir compte de la dureté moindre.

6. Moteur électrique rotatif ou linéaire suivant la revendication 5, caractérisé en ce que broches (2) sont en acier ou plastique tenace et le rotor (4) en plastique tenace, par exemple en résine renforcée de fibres de verre ou de fibres de carbone.

7. Moteur électrique rotatif ou linéaire suivant l'une quelconque des revendications 1 à 6, caractérisé en ce que l'angle d'incidence a des broches d'entraînement (2) d'un moteur rotatif comportant une plaque de rotor circulaire plane (4) diminue continuellement de l'axe du rotor vers la périphérie de la plaque de rotor.

8. Moteur électrique rotatif ou linéaire suivant l'une quelconque des revendications 1 à 7, caractérisé en ce qu'on a prévu un élément vibratoire piézo-électrique annulaire (15), bloqué en direction radiale et circonférentiellement contre la rotation, pourvu à sa paroi extérieure (17) de broches d'entraînement (2) faisant saillie, qui coopèrent avec une paroi intérieure (19) d'un rotor (18).

9. Moteur électrique rotatif ou linéaire suivant la revendication 8, caractérisé en ce que la paroi intérieure (19) du rotor en forme de creuset (18) est conique et les broches d'entraînement (2) de longueurs différentes, de manière à s'adapter à cette conicité, de sorte que même en cas d'usure des broches (2) ou de la paroi intérieure (19), les broches (2) sont toujours pressées avec une force pratiquement constante contre la paroi intérieure.

10. Moteur électrique rotatif ou linéaire suivant la revendication 8, caractérisé en ce que le rotor (18) est séparé en deux parties (23, 24) qui sont pressées par des ressorts individuels contre les broches d'entraînement (2).

11. Moteur électrique rotatif ou linéaire suivant l'une quelconque des revendications 1 à 7, caractérisé en ce que, dans une construction comme moteur linéaire, l'élément vibratoire est construit sous forme de cylindre creux piézo-électrique (45), à travers lequel un arbre (41) est introduit, soit l'arbre (41) pouvant être déplacé comme rotor par rapport à un cylindre creux (45) fixe, soit le cylindre creux (45) comme cavalier par rapport à l'arbre (41).

12. Moteur électrique rotatif ou linéaire suivant la revendication 11, caractérisé en ce que l'arbre (41) a une section ovale.

13. Moteur électrique rotatif ou linéaire suivant la revendication 11, caractérisé en ce que les broches d'entraînement (2) sont fixées à la moitié supérieure et les broches d'entraînement (2') à la moitié inférieure de la paroi intérieure du cylindre creux piézo-électrique (45) de telle manière que, lorsque les broches (2) pressent contre la surface de frottement (50), on obtient un déplacement relatif de l'arbre (41) dans un sens et lorsque les broches (2') pressent contre la surface de frottement (51), un déplacement relatif dans le sens opposé.

14. Moteur électrique rotatif ou linéaire suivant l'une quelconque des revendications 1 à 7, caractérisé en ce que l'organe moteur d'un moteur linéaire est constitué de deux éléments vibratoires piézo-électriques (55,56) qui peuvent être excités séparément l'un de l'autre.

15. Moteur électrique rotatif ou linéaire suivant la revendication 14, caractérisé en ce qu'on prévoit un rotor (52) en forme de U et en ce que des broches d'entraînement (2, 2') sont fixées sur les surfaces (57, 58) des éléments vibratoires (55, 56) de telle façon que, par pressage des broches (2) contre la surface de frottement (61), le rotor (52) se déplace dans une direction et par pressage des broches (2') contre la surface de frottement (62), dans la direction opposée.

Fig.1

Fig.1a

Fig.2

Fig.3

Fig.4

Fig. 5

Fig.6

## Fig. 7

## Fig. 8

Fig.9

Fig.10